# EUROPEAN PATENT SPECIFICATION

(11) **EP 1 799 773 B1**
(45) Date of publication and mention of the grant of the patent: **29.02.2012**
(21) Application number: 05777912.6
(22) Date of filing: 01.09.2005
(51) Int. Cl.: C09B 67/08, C09B 67/10, C09B 63/00, C08K 9/10, C08G 83/00, C09B 67/02

(54) **DYE MATERIALS AND INFRA RED ACTIVE POLYMER COMPOSITIONS THEREOF**
FARBSTOFFE UND INFRAROTAKTIVE POLYMERZUSAMMENSETZUNGEN DARAUS
SUBSTANCES COLORANTES ET COMPOSITIONS POLYMERES ACTIVES INFRAROUGES LES COMPRENANT

(30) Priority: 03.09.2004 AU 2004905014
(43) Date of publication of application: 27.06.2007
(73) Proprietor: Tropiglas Technologies Ltd, Yokine WA 6060 (AU)
(72) Inventor: CSER, Ferenc, Queanbeyan, New South Wales 2620 (AU)
(74) Representative: Stilkenböhmer, Uwe Michael
(86) International application number: PCT/AU2005/001331
(87) International publication number: WO 2006/024103

(56) References cited:
- WO-A-99/63006
- DE-C1- 3 719 051
- GB-A- 2 290 626
- US-A- 3 950 180
- US-B1- 6 503 559
- DATABASE WPI Week 197426, 09 January 1974 Derwent Publications Ltd., London, GB; Class A96, AN 1974-47781V, XP003016398 & JP 49 001 737 A (KATO C)
- DATABASE WPI Week 200519, 10 February 2005 Derwent Publications Ltd., London, GB; Class A89, AN 2005-180067, XP003016399 & US 2005 031 982 A1 (RAO Y ET AL)
- DATABASE WPI Week 200431, 01 April 2004 Derwent Publications Ltd., London, GB; Class E24, AN 2004-331964, XP003016400 & DE 103 43 197 A1 (KOEHLER PAPIERFAB AG AUGUST)
- DATABASE WPI Week 199945, 10 September 1999 Derwent Publications Ltd., London, GB; Class A89, AN 1999-540906, XP003017501 & WO 99 45434 A1 (CYCOLOR SYSTEM CO LTD)
- DATABASE WPI Week 199705, 19 November 1996 Derwent Publications Ltd., London, GB; Class B07, AN 1997-048566, XP003017502 & JP 08 302 230 A (SANEIGEN FFI KK)
- DATABASE WPI Week 199418, 05 April 1994 Derwent Publications Ltd., London, GB; Class T04, AN 1994-147558, XP003017503 & JP 06 092 028 A (KANZAKI PAPER MFG CO LTD)
- DATABASE WPI Week 199414, 08 March 1994 Derwent Publications Ltd., London, GB; Class P75, AN 1994-114912, XP003017504 & JP 06 064 312 A (KANZAKI PAPER MFG CO LTD)
- DATABASE WPI Week 199338, 24 August 1993 Derwent Publications Ltd., London, GB; Class P42, AN 1993-299362, XP003017505 & JP 05 212 956 A (MITSUBISHI PAPER MILLS LTD)
- DATABASE WPI Week 199314, 02 March 1993 Derwent Publications Ltd., London, GB; Class P75, AN 1993-112505, XP003017506 & JP 05 050 746 A (FUJIPHOTO FILM FO LTD)
- DATABASE WPI Week 198741, 08 October 1987 Derwent Publications Ltd., London, GB; Class P83, AN 1987-285539, XP003017507 & DE 37 10 758 A1 (BROTHER IND KK)
- DATABASE WPI Week 198414, 15 June 1983 Derwent Publications Ltd., London, GB; Class E24, AN 1984-086364, XP003017508 & SU 1 022 977 A1 (MOSCOW MENDELEEV CHEM IN)
- DATABASE WPI Week 197927, 24 May 1979 Derwent Publications Ltd., London, GB; Class D21, AN 1979-49819B, XP003017509 & JP 54 064 644 A (SHISHEIDO KK)
- DATABASE WPI Week 197523, 27 May 1975 Derwent Publications Ltd., London, GB; Class E17, AN 1975-37588W, XP003017510 & CA 968 232 A1 (MOORE BUSINESS FORM INC)

## Description

### FIELD OF THE INVENTION

This invention relates to dye materials and infrared (IR) active polymer compositions thereof.

This invention has particular but not exclusive application to dye materials, and IR active polymer compositions incorporating said dye materials for use in glazing laminates, and for illustrative purposes reference will be made to such application. However, it is to be understood that this invention could be used in other applications, such as providing infrared active coatings.

### PRIOR ART

SU 1022977 discloses the use of a mixture of aqueous wastes of organic dye production as the starting material in the preparation of organic lakes. In use the aqueous waste is treated with clay, kaolin or bentonite. The method utilises an industrial waste while removing harmful, carcinogenic products from the waste.

WO 99/63006 A disclose colorant compositions containing neonanoplasts that exhibit improved color brightness and brilliance due to the incorporation of one or more colorants in the neonanoplasts. The colorant compositions may be used in printed textiles.

US 3,950,180 A discloses coloring compositions that can be used as coloring pigments, coloring fillers for rubber, printing ink, crayon and coloring pencils. The coloring compositions comprise inorganic substances and organic basic colored compounds.

DE 3,719,051 C discloses a process for preparing encapsulated pigments comprising a color-bearing substance encapsulated in a transparent casing of a substance resistant to chemical attack. The process involves compounding the color-bearing substance with the transparent casing substance and calcining at 500 °C to 1200 °C. The color-bearing substance is bound in and / or to a zeolite.

WO 02/070254 A1 published 12 September 2002 describes IR active glazing laminates to ameliorate heating of the interior of a building by solar radiation. The disclosure includes glazing laminates having IR absorbing dye in polymer to form at least one IR active layer, usually sandwiched between glass layers. Production of the infrared active polymeric layer presents technological difficulties. The solvent casting method used to prepare the active layer on glass surfaces could not be used to prepare active layers with larger homogeneous surface areas due to the extremely high surface tension of the solution of the carrier polymer. Using mixtures of different solvents, for example a mixture of a good solvent with higher volatility and a poor solvent with lower volatility, made it possible to cast the active layer at decimetre area scales but the casting techniques are difficult to use successfully for much bigger surface areas.

The infrared active organic material selected also showed yellow to green colour which may be a commercial disadvantage in certain applications. In order to ameliorate the yellow/green tint, grey organic dyes were added, reducing the net visible transmission. As the organic colour dyes tended to react with the IR and other dyes, this necessitated the use of discrete dye layers increasing laminate complexity.

The infrared active organic materials are not readily mixed into the melt of thermoplastic polymers used for the lamination by conventional polymer processing techniques. The thermoplastic polymer systems do not effectively dissolve the infrared active organic material under processing conditions, resulting in the dyes acting instead as poor pigments of particle sizes above the micrometer range, and the films produced in this way were accordingly ineffective and non transparent.

The infrared active organic materials are generally not readily dissolved in curable liquid resin systems such as unsaturated polyester or epoxy resins. It has been observed that the infrared activity of attempts at such compositions reduced to essentially zero during the cure, presumably as a side reaction to the sure, such that the cured cross-linked resin compositions did not exhibit useful infrared activity.

There accordingly remains a need for dye materials that may be used in the production of IR active polymer compositions that can be produced by conventional polymer technologies like batch mixing, extrusion or film blowing or cross-linking of liquid polymeric resins. It is an object of preferred embodiments of the present invention to provide IR active polymer compositions that are useful for the production of laminated IR active glazing materials. It is a further object of particular embodiments of the present invention to provide an IR active polymer composition which incorporates the dye materials that provides a colour matched film at the same technical step of production as forming the film melt.

### DESCRIPTION OF THE INVENTION

In one aspect the present invention resides broadly in a dye composition including an organic dye nano-encapsulated in a clay material, wherein the dye material is selected to provide IR radiation absorption in a polymer matrix.

The organic dye may be selected from one or more dyes known for their IR active properties. However, it is envisaged that other dye materials may undergo a shift in the absorption maximum Aₘₐₓ as a consequence of nano-encapsulation and/or dispersal of the dye composition in a polymer matrix to form polymer compositions that absorb IR radiation. Alternatively the dye may be selected to provide for polymer compositions that absorb in other parts of the EM spectrum such as the UV or visible bands.

For example, some of the common organic dyes used to colour textile, wood, leather etc. may also be encapsulated. Indigo, Rhodamine B, Saframine and many other colouring dyes may be reacted with layered silicate clay materials to form nanopigment with retention of the colour of the dye with slight modification. These nanopigments can also be mixed with different polymers including those used to prepare laminated glazing. These nanopigments can be used to match the colour of the infrared active nanopigment modified polymer to form for example grey coloured laminates. The nanopigments are compatible, they do not react with each other, and therefore they can be mixed to the same polymeric layer.

The clay may be selected from the layered clay materials known to form nano-encapsulates. For example the clay material may be selected from smectic clays such as bentonite or montmorillonite or other natural or synthetic laminar clay material. Preferably the clay material has a cation exchange capacity (CEC) of 60-180 mmole sodium eqivalent/100 g of clay. It has been observed that not all ostensibly infrared active organic materials, nano-encapsulated in layered clay materials to form a "nanopigment", that is a nanoparticulate composition exhibiting dye-like properties, keep their infrared activity in polymer composition. However, a surprising result is that all of the materials tested could be mixed with glazing or optical curable and thermoplastic polymeric systems to form transparent polymeric films and laminates.

The nanopigments of the present invention may be produced by any suitable process. For example, the infrared active organic materials such as immonium type dyes typified by the EPOLIGHT infrared dyes of the 1000 and 2000 series such as the 1125, 1178 and 2057 types may be nano-encapsulated with a clay material such as Na-bentonite with a CEC of 95 mmole Na per 100 g of bentonite at room temperature by dissolving the Na-bentonite in water and mixing thoroughly, then adding the dye preferably dissolved in a solvent miscible in water such as a lower alcohol. The nano-encapsulation reaction may be conducted in the water/alcohol mixture at ambient temperatures, or may be conducted at temperatures of typically between 20°C to 80 °C for reaction times of from 4 hours to 24 hours to form infrared active nanopigment. The precipitate may be filtered, washed with water/alcohol mixture (preferably until the eluate substantially ion-free), and dried before milling.

The ratio of dye to clay depends on the chemical nature of the dye and may for example vary from 0.05 to 0.3 parts of dye per part of clay. The filtered precipitate formed in the reaction is preferably washed with water/alcohol mixture until the effluent is ion free. After drying, preferably at room temperature either in vacuum or at atmospheric pressure, the precipitate is preferably milled to average particle size of less than 15 µm to obtain the infrared active nanopigment.

It is observed that mere mechanical mixtures of the clay and dye without the reaction in an aqueous environment produced compositions that when incorporated in polymer produced films that were non transparent and did not show appreciable infrared activity.

The reaction of the dye with clay may be demonstrated by comparing the X-ray diffraction patterns of dye compositions produced in accordance with the present invention with the diffraction patterns of the mere mechanical mixtures, indicating that, in the reacted product, swelling in the clay materials indicates the intercalation of the organic dye.

Accordingly, in a further aspect this invention resides broadly in a method of producing a nano-encapsulated dye material including the steps of:
dispersing a clay material having a cation exchange capacity (CEC) of 60-180 mmole sodium equivalent/100 g of clay in an aqueous medium;
dissolving an organic dye in a solvent or mixture which is miscible with said aqueous medium;
mixing said dispersed clay and dissolved dye to form a precipitate;
separating said precipitate;
drying said precipitate; and
milling said dry precipitate to an average particle size of less than 15µm, wherein the dye material is selected to provide IR radiation absorption in a polymer matrix.

Preferably, there is a step after separating the precipitate of washing until the eluate is essentially ion free, in order to avoid any unintended reaction of free ions with resin systems. The particle size of the milled composition appears to have a correlation with UV stability of the composition. As the particle size decreases, the UV stability also tends to decrease with some dye/lay compositions. Accordingly it is preferred that the particle size be empirically selected to be less than 15µm to avoid haze while maintaining a sufficient particle size to maximize UV stability.

In another aspect this invention resides broadly in a dye composition including an organic dye nanoencapulated in a clay material having a cation exchange capacity (CEC) of 60-180 mmole sodium eqivalent/100 g of clay, wherein the dye material is selected to provide IR radiation absorption in a polymer matrix.

The dye compositions of the present invention may be utilized in thermoplastic polymer compositions by incorporation in the particulate polymer before melt forming or directly into the polymer melt. It has been determined that the temperature stability of organic dyes is enhanced by nano-encapsulation in the clay materials. The dye compositions may be incorporated into curable liquid polymer compositions by dispersal in the liquid prepolymer before curing. It is observed that organic dyes that would otherwise react with the curing system are rendered substantially inert to the curing system on nano-encapsulation according to the present invention.

Accordingly, in a further aspect this invention resides broadly in an optically active polymer composition including an optically transmissive polymer matrix having dispersed therein a dye composition including an organic dye nano-encapsulated in a clay material.

The polymer compositions may be used in many applications. For example, liquid curable polymer compositions may be used as an encapsulating or potting composition for optically active electronic components such as light emitting or sensing devices. In one application the liquid curable composition may form an integral IR filter layer for a light sensing element used to switch electronic circuits controlling, for example, security or safety lighting.

Laminated glass structures for preventing the penetration of heating solar radiation generally have at least one polymer layer between at least outer glass layers. The polymer layer may contain the present nano-encapsulated dye materials selected to have a high optical density in the required infrared energy range. Thermoplastic polymer containing the infrared active nanopigment may be prepared either by using conventional thermoplastic polymer processing techniques like extrusion or film blowing, hot formed to the glass surfaces or adhered with an adhesive interlayer. Curable liquid polymer compositions containing the nano-encapsulated dye may be cast as a curable liquid straight to the glass surfaces, whereby the curing process both adheres the laminate and cross-links the polymer to the solid state. Alternatively, the curable polymer may be formed into optically active sheets to be adhesively laminated to the glass layers.

The infrared active nanopigment may be mixed into thermoplastic polymers used for the preparation of security glass, such as polyvinyl butyral (PVB) or poly (ethylene-co-acrylic acid) or other polymers or polymeric systems used for similar purposes. The incorporation may be by conventional thermoplastic processing techniques like batch mixing or extrusion to prepare either master batch or directly a polymeric film. Film can either be extruded or blown from the polymer containing the suitable amount of infrared active nanopigment. The film used for preparing laminated glazing with heat retarding effect may contains from about 0.1 to about 0.5 parts of infrared active nanopigment per 100 parts of carrier polymer. Master batches contain up to 10 parts of infrared active nanopigments per 100 parts of carrier polymer may be used to aid dispersion in the final polymer composition.

The infrared active nanopigment may be mixed into liquid polymeric systems such as unsaturated polyester, epoxy or urethane polymeric systems to about 0.1 to about 0.5 parts of infrared active nanopigment(s) per 100 parts of liquid polymeric system.

The laminated glass structure with the polymeric layer containing the infrared active nanopigment or pigments absorbs IR radiation having an incident direction and spherically re-radiates the absorbed energy. Due to the difference in refractive index of the layers a proportion of the energy in conducted by total internal reflection to the laminate edges to be guided out of the structure. The re-radiated light can either be redirected to the outer space using reflective surface or be absorbed by suitable device and utilized for other purposes, such as is described in WO 02/070254 A1.

### BRIEF DESCRIPTION OF THE FIGURES

In order that this invention may be more readily understood and put into practical effect, reference will now be made to the following examples and accompanying Figures which describe a preferred embodiment of the invention and wherein:
FIG. 1 is a plot of the energy dispersion of solar radiation;
FIG. 2 is a detail shows the NIR absorption of structures in accordance with the present invention;
FIG. 3 is a comparative the X-ray diffraction pattern distinguishing dye materials in accordance with the present invention from mere admixtures of the components; and
FIG. 4 is a plot of the infrared activity of the nanopigment compared to that of mere admixtures of the components.

### DESCRIPTION OF THE EMBODIMENTS AND COMPARATIVE EXAMPLES

### Example 1

A glass structure was constructed from two glass microscopy slides of 1 mm thickness, and laminated by a 0.4 mm thick polymeric layer, which contained 0.3 parts of nanopigment. The nanopigment was formed by the process of the present invention from 1 parts of EPOLIGHT 2057 Near-IR dye and 9 parts of Na-bentonite with a CEC of 92 mmole Na per 100 g of clay. The structure was illuminated by a laser diode source with a maximum of 30 µA photo current and having a wavelength of 930 nm. The re-directed IR energy was measured at the edge of the structure, where a 1 µA photo current could be measured.

The IR retardation power of the structure depends on the type and on the specific amount of the dye given as g/m2. 65% retardation can be achieved by 0.1-0.3 g/m2 amount of dye keeping 65-85% of optical transparency. Using 0.7-1.2 g/m2 dye concentration 90-98% retardation can be achieved with 55-65% of optical transparency. These data are achieved using EPOLIGHT 2057 within SGP resin of poly(ethylene-co-acrylic acid).

At least 135°C annealing temperature is necessary to form laminated glazing from the polymer containing the nanopigment and the dye survives at this temperature in SGP layer for 30-35 min. The nanopigment did not lose its retardation effect when mixed into unsaturated polyester resin and polymerized at room temperature using peroxide initiator.

### Example 2

Nanopigments were prepared from 1 part by weight of infrared active organic materials (EPOLITE infrared dyes of 1125, 1178 and 2057 types) and 10 parts by weight of Na-bentonite with CEC of 95 mmole Na per 100 g of bentonite, at room temperature, by dissolving the Na-bentonite in 100 parts by weight of water and mixing for 2 hours. The dye is dissolved in 5 parts by weight of ethanol and mixed into the aqueous solution for 18 hours. Colourless solution is seen above discoloured precipitate. The sediment is filtered, washed three times with 10 parts of 1:1 water/ethanol mixture. The precipitate is then dried at 105°C for 10 hours at atmospheric pressure. The dried material is milled in a kitchen miller for 2 mins.

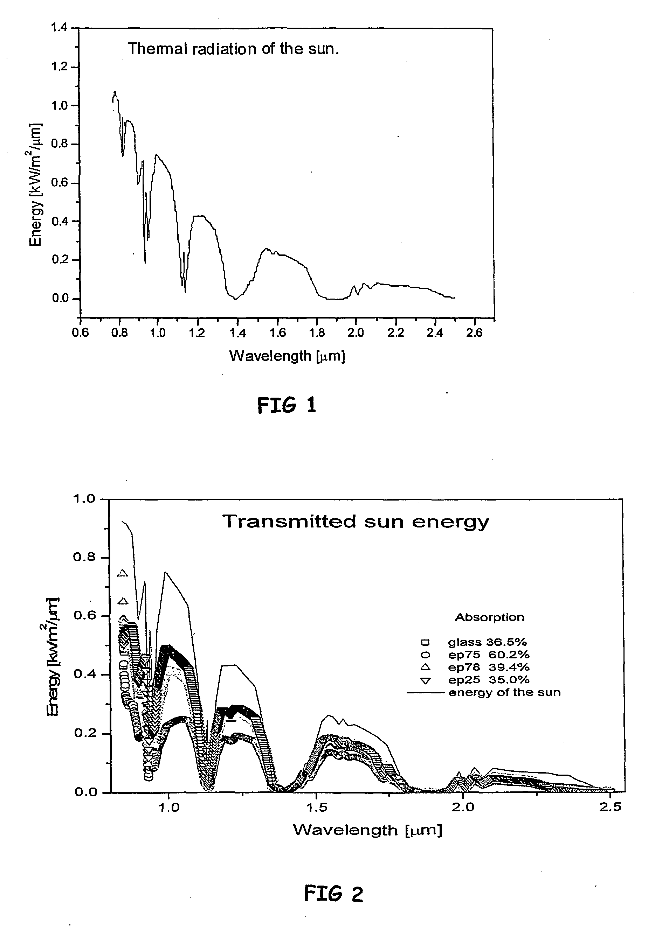

0.3 parts of the respective nanopigments of Example 2 are mixed to 100 parts of pulverized SPG resin. The mixture is fed into an extruder with a die temperature of 190°C using 50 RPM and a residence time of 4 mins. Transparent, faintly green or grey coloured extrudates were obtained. The extrudates were used to press film of 0.4 mm thickness at 160 °C in a conventional press. The films were used to prepare laminated glass using 2 glass plates of 1 mm thickness at 135 °C with 3 pps pressure applied for 20 mins. Near infrared absorption spectra of the glass structures were obtained in a Perkin-Elmer Spectrophotometer. Figure 2 shows the NIR absorption of some of the structures with different absorptive power as well as the energy dispersion of the IR retardation.

When the same structures were prepared from the mechanical mixture of the infrared active organic material and Na-Bentonite with the same compositions used to prepare nanopigment without the chemical reaction carried out in watery environment, the films were non transparent and did not show infrared activity at all.

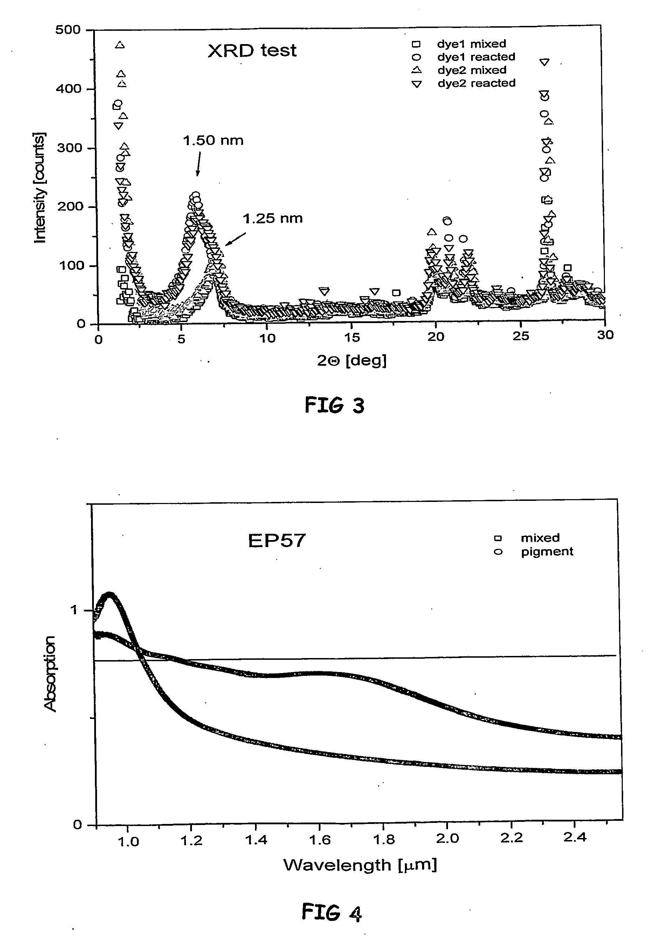

The reaction of the infrared organic materials with Na-Bentonite is proven by X-ray diffraction patterns shown in Figure 3. Here the X-ray diffraction pattern of the mechanical mixture is compared to those of the reacted product indicating a swelling in the clay materials as an indication of the intercalation of the organic dye.

The infrared activity of the nanopigment is compared to that of the mechanical mixture with the same composition on Figure 4. The mechanical mixture does not show remarkable infrared activity at the highest energy range of the heating radiation of the Sun. The nanopigment shows an intensive absorption peak there (wavelength of 1 µm). Here the data of EPOLIGHT 2057 are shown. This is another proof of the chemical reaction of the infrared active organic material with the laminar clay mineral.

### Example 3

0.8 parts of Rhodamine B is mixed with 10 parts of water then 0.01 parts of 1 mole/litre hydrochloric acid are added to the solution. 10 parts of Na-bentonite is mixed with 100 parts of water and the two solutions are mixed and stirred for 4 hours. The pink solution turns colourless and pink material is precipitated. The precipitate is washed three times with de-ionized water, dried and milled. 1 parts of this nanopigment is mixed to 15 parts of infrared active nanopigment formed from Epoline 2057 to match its colour in SGP resin shown above.

### Example

30 g of BECKEPOX EP824 is mixed with 0.3 g of pigment prepared from Na-bentonite 1 g and EPOLIGHT 2057 0.15 g in a Silverson mixer for 45 min. The dark green mixture is degassed and mixed with 13.9 g of BECKEPOX EH624. 1 mm layer of the mixture is formed between two glass plates of 1 mm thick each. The laminate is solid in 1 hour. It is post cured at 90 °C for 1 hour. The IR retardation of the laminate is 73%, visual transparency is 55%. The laminate has a green-grey colour.

The same mixture is prepared using 0.045 g of Epolight 2057 instead of 0.3 g of pigment. The initially dark green solution is colourless within 5 min and the laminate formed from the mixture and two glass plates has an IR retardation of 21 %.

### Example 5

50 g of GLASSLAM resin is mixed with 0.3 g of pigment formed from 1 g of Na-Bentonite and 0.15 g of EPOLITE 2067 in a Silverson mixer for 1 hour. The dark green transparent solution is mixed with 0.05 g of methyl-ethyl ketone peroxide and 1 mm of layer of the well mixed solution is formed between two glass plates of 1 mm thick. The laminate is solid in 1 hour, and it is post cured at 60 °C for 1 hour. The IR retardation of the laminate is 78%; its visual transparency is 60%. The laminate has a blue-green grey colour.

If the same mixture is prepared using 0.05 g of EPOLIGHT 2067 instead of the pigment, the originally dark green colour of the mixture is lost within 3 min after methyl-ethyl ketone peroxide was mixed. The laminate did not cure properly; it remained soft even after post curing for 3 h at 90 °C. The IR retardancy of the laminate is 19 %.

### Example 6

125 g of dihexyl sebacate is mixed with 6 g of pigment prepared from Na-bentonite 1 g and EPOLIGHT 2057 0.15 g and mixed in a Silverson mixer for 6 hours. The dark green liquid is mixed with 375 g of polyvinyl butyral (PVB) powder produced by Chang Chun Petrochemical Co. Taiwan and fed into the feeder of a twin screw extruder with a 175 °C barrel and dye temperature. The extrudate produced by 90 RPM is pelletised. 1 mm thick sheets of brownish green colour are pressed from the pellets at 145 °C. Part of the sheet is inserted in between two glass plates and heated at 135 ° C for 10 min in an oven using a pressing frame. The IR retardancy of the laminate is 69%

When 1 g of Epolight 2057 is used instead of the pigment, the sheets contain individual dye particles, its colour is light brownish yellow and its IR retardancy is 22%.

### Example 7

500 g of Sentry Glass Polymer (Dupont) pellet is mixed with 6 g of pigment
prepared from Na-bentonite 1 g and EPOLIGHT 2057 0.15 g and fed into the feeder of a twin screw extruder with 190°C of barrel and 180 °C of dye temperatures. The extrudate produced by 90 RPM is pelletised, and 1 mm thick layers of greenish grey colour are pressed from the pellet at 160 °C. Part of the sheet is inserted in between two glass plates and heated at 145 ° C for 10 minutes in an oven using a pressing frame. The IR retardancy of the laminate is 59%

When 1 g of Epolight 2057 is used instead of the pigment, the sheets contain individual dye particles, its colour is light brownish yellow and its IR retardancy is 20%.

Remarks: IR retardancy was measured by IR spectrophotometer and the retarded energy was calculated by integration of the transmitted energy of the Sun. This means that the energy spectrum of the Sun was multiplied by the transparency values measured by the spectrophotometer. Generally IR retardancy is given in the literature as the peak absorption level of the IR spectrum. In these examples the peak absorption levels at 1000 nm were 85%-19%, 84%-21 %, 95%-30%, and 90%-27% respectively.

This process does not need solvent casting. It is environmental friendly. The encapsulation of the infrared active organic material protects the activity against environmental hazards like UV radiation, chemicals in the resins. The long term stability of the system is increased. The solvent(s) used for preparing the nanopigment is(are) to be reused and easily to be recycled. The encapsulation can be carried out as the final cleaning process in the preparation of the infrared active organic materials therefore there is no need to use dangerous chemicals there like antimon-hexafluoric acid or other strong acids.

It will of course be realised that while the above has been given by way of illustrative example of this invention, all such and other modifications and variations thereto as would be apparent to persons skilled in the art are deemed to fall within the broad scope and ambit of this invention as is herein set forth.

## Claims

1. A dye composition including an organic dye nano-encapsulated in a clay material,
wherein the dye material is selected to provide IR radiation absorption in a polymer matrix.

2. A dye composition according to claim 1, wherein said organic dye is selected from one or more IR active dyes.

3. A dye composition according to claim 1, wherein said organic dye is selected from dye materials that undergo a shift in the absorption maximum Aₘₐₓ as a consequence of nano-encapsulation and/or dispersal of the dye composition in a polymer matrix to form polymer compositions that absorb IR radiation.

4. A dye composition according to claim 1, wherein said organic dye is selected to provide for polymer compositions that absorb in other parts of the EM spectrum such as the W or visible bands.

5. A dye composition according to any one of the preceding claims, wherein said clay is selected from smectic clays and other natural or synthetic laminar clay materials.

6. A dye composition according to claim 5, wherein said clay is selected from bentonite or montmorillonite.

7. A dye composition according to claim 5 or claim 6, wherein said clay material has a cation exchange capacity (CEC) of 60-180 mmole sodium eqivalent/100 g of clay.

8. A dye composition according to claim 7, wherein the ratio of dye to clay is from 0.05 to 0.3 parts of dye per part of clay.

9. A dye composition according to claim 7, wherein the composition is milled to average particle size of less than 15 µm.

10. A method of producing a nano-encapsulated dye material including the steps of:
(a) dispersing a clay material having a cation exchange capacity (CEC) of 60-180 mmole sodium eqivalent/100 g of clay in an aqueous medium;
(b) dissolving an organic dye in a solvent or mixture which is miscible with said aqueous medium;
(c) mixing said dispersed clay and dissolved dye to form a precipitate; separating said precipitate;
(d) drying said precipitate; and
(e) milling said dry precipitate to an average particle size of less than 15µm,
wherein the dye material is selected to provide IR radiation absorption in a polymer matrix.

11. A method according to claim 10, wherein there is included between steps (c) and (d) a further step of washing said precipitate until the washing eluate is essentially ion free.

12. A method according to any one of claims 10 and 11, wherein said dye selected from one or more immonium type IR active dyes.

13. A method according to claim 12, wherein said solvent includes a lower alcohol.

14. A method according to any one of claims 10 to 13, wherein said clay material is Na-bentonite with a CEC of 95 mmole Na per 100 g of bentonite at room temperature.

15. A method according to any one of claims 10 to 14, wherein said nano-encapsulation reaction is conducted at between 20°C to 80 °C for reaction times of from 4 hours to 24 hours.

16. A method according to any one of claims 10 to 15, wherein the ratio of dye to clay is from 0.05 to 0.3 parts of dye per part of clay,

17. A dye composition prepared according to the method of any one of claims 10 to 16.

18. A dye composition including an organic dye nanoencapulated in a clay material having a cation exchange capacity (CEC) of 60-180 mmole sodium eqivalent/100 g of clay,
wherein the dye material is selected to provide IR radiation absorption in a polymer matrix.

19. A dye composition according to any one of claims 1 to 9 and 17 and 18,
(a) when used in thermoplastic polymer compositions by incorporation in the particulate polymer before melt forming or directly into the polymer melt, or
(b) when incorporated into curable liquid polymer compositions by dispersal in the liquid prepolymer before curing.

20. An optically active polymer composition including an optically transmissive polymer matrix having dispersed therein a dye composition including an organic dye nano-encapsulated in a clay material.

21. A polymer composition according to claim 20, wherein said dye composition is according to any one of claims 1 to 9 and 17 and 18.

22. A polymer composition according to claim 20, wherein said dye composition is produced according to the method of claims 10 to 16.

23. A liquid curable polymer composition according to any one of claims 20 to 22, when used as an encapsulating or potting composition for optically active electronic components.

24. A polymer composition according to any one of claims 20 to 22, when used as a polymer layer in laminated glass structures.

25. A polymer composition according to claim 24, wherein said polymer is selected from polyvinyl butyral (PVB) and poly (ethylene-co-acrylic acid).

26. A polymer composition according to claim 24 or claim 25, wherein the dye content is about 0.1 to about 0.5 parts of infrared active nanopigment per 100 parts of polymer.

## Patentansprüche

1. Farbstoffzusammensetzung, die einen organischen Farbstoff umfasst, der in einem Tonmaterial nanoverkapselt ist,
wobei das Farbstoffmaterial so ausgewählt ist, dass es IR-Strahlungsabsorption in einer Polymermatrix bietet.

2. Farbstoffzusammensetzung nach Anspruch 1, wobei der organische Farbstoff unter einem oder mehreren IR-aktiven Farbstoffen ausgewählt ist.

3. Farbstoffzusammensetzung nach Anspruch 1, wobei der organische Farbstoff aus Farbstoffmaterialien ausgewählt ist, die eine Verschiebung des Absorptionsmaximums Aₘₐₓ durchmachen als Folge von Nanoverkapselung und/oder Dispergierung der Farbstoffzusammensetzung in einer Polymermatrix unter Bildung von Polymerzusammensetzungen, die IR-Strahlung absorbieren.

4. Farbstoffzusammensetzung nach Anspruch 1, wobei der organische Farbstoff so ausgewählt ist, dass er Polymerzusammensetzungen bereitstellt, die in anderen Teilen des EM-Spektrums, wie den UV- oder sichtbaren Banden, absorbieren.

5. Farbstoffzusammensetzung nach einem der vorhergehenden Ansprüche, wobei der Ton unter smektischen Tonen und anderen natürlichen oder synthetischen laminaren Tonmaterialien ausgewählt ist.

6. Farbstoffzusammensetzung nach Anspruch 5, wobei der Ton aus Bentonit oder Montmorillonit ausgewählt ist.

7. Farbstoffzusammensetzung nach Anspruch 5 oder Anspruch 6, wobei das Tonmaterial ein Kationenaustauschvermögen (KAV) von 60-180 mmol Natriumäquivalentenl100 g Ton aufweist.

8. Farbstoffzusammensetzung nach Anspruch 7, wobei das Verhältnis von Farbstoff zu Ton 0,05 bis 0,3 Teile Farbstoff pro Teil Ton beträgt.

9. Farbstoffzusammensetzung nach Anspruch 7, wobei die Zusammensetzung auf eine durchschnittliche Teilchengröße von weniger als 15 µm gemahlen ist.

10. Verfahren zum Herstellen eines nanoverkapselten Farbstoffmaterials, umfassend die Schritte des:
(a) Dispergierens eines Tonmaterials, das ein Kationenaustauschvermögen (KAV) von 60-180 mMol Natriumäquivalenten/100 g Ton aufweist, in einem wässrigen Medium;
(b) Lösens eines organischen Farbstoffs in einem Lösungsmittel oder einer Mischung, die mit dem wässrigen Medium mischbar ist.;
(c) Mischens des dispergierten Tons und gelösten Farbstoffs unter Bildung einer Ausfällung;
Abtrennens der Ausfällung;
(d) Trocknens der Ausfällung; und
(e) Mahlens der trockenen Ausfällung auf eine durchschnittliche Teilchengröße von weniger als 15 µm,
wobei das Farbstoffmaterial so ausgewählt wird, dass es IR-Strahlungsabsorption in einer Polymermatrix bietet.

11. Verfahren nach Anspruch 10, wobei zwischen den Schritten (c) und (d) ein weiterer Schritt des Waschens der Ausfällung, bis das Wascheluat im Wesentlichen ionenfrei ist, eingeschlossen ist.

12. Verfahren nach einem der Ansprüche 10 und 11, wobei der Farbstoff unter einem oder mehreren IR-aktiven Farbstoffen vom Immoniumtyp ausgewählt wird.

13. Verfahren nach Anspruch 12, wobei das Lösungsmittel einen niederen Alkohol umfasst.

14. Verfahren nach einem der Ansprüche 10 bis 13, wobei das Tonmaterial Na-Bentonit mit einem KAV von 95 mmol Na pro 100 g Bentonit bei Raumtemperatur ist.

15. Verfahren nach einem der Ansprüche 10 bis 14, wobei die Nanoverkapselungsreaktion bei 20 °C bis 80 °C für Reaktionszeiten von 4 Stunden bis 24 Stunden durchgeführt wird.

16. Verfahren nach einem der Ansprüche 10 bis 15, wobei das Verhältnis von Farbstoff zu Ton 0,05 bis 0,3 Teile Farbstoff pro Teil Ton beträgt.

17. Farbstoffzusammensetzung, hergestellt gemäß dem Verfahren nach einem der Ansprüche 10 bis 16.

18. Farbstoffzusammensetzung, die einen organischen Farbstoff umfasst, der in einem Tonmaterial nanoverkapselt ist, das ein Kationenaustauschvermögen (KAV) von 60-180 mMol Natriumäquivalenten/100 g Ton aufweist,
wobei das Farbstoffmaterial so ausgewählt ist, dass es IR-Strahlungsabsorption in einer Polymermatrix bietet.

19. Farbstoffzusammensetzung nach einem der Ansprüche 1 bis 9 und 17 und 18,
(a) wenn sie in thermoplastischen Polymerzusammensetzungen durch Einarbeiten in das teilchenförmige Polymer vor der Schrnelzverformung oder direkt in die Polymerschmelze verwendet wird, oder
(b) wenn sie in aushärtbare flüssige Polymerzusammensetzungen durch Dispergieren in dem flüssigen Prepolymer vor dem Aushärten eingearbeitet wird.

20. Optisch aktive Polymerzusammensetzung, die eine optisch transmissive Polymermatrix umfasst, in der eine Farbstoffzusammensetzung dispergiert ist, die einen organischen Farbstoff umfasst, der in einem Tonmaterial nanoverkapselt ist.

21. Polymerzusammensetzung nach Anspruch 20, wobei die Farbstoffzusammmensetzung einem der Ansprüche 1 bis 9 und 17 und 18 entspricht.

22. Polymerzusammensetzung nach Anspruch 20, wobei die Farbstoffzusammensetzung gemäß dem Verfahren nach den Ansprüchen 10 bis 16 gemäß hergestellt ist.

23. Flüssige aushärtbare Polymerzusammensetzung nach einem der Ansprüche 20 bis 22, wenn sie als Verkapselungs- oder Einbettzusammensetzung für optisch aktive elektronische Komponenten verwendet wird.

24. Polymerzusammensetzung nach einem der Ansprüche 20 bis 22, wenn sie als Polymerschicht in laminierten Glasstrukturen verwendet wird.

25. Polymerzusammensetzung nach Anspruch 24, wobei das Polymer unter Polyvinylbutyral (PVB) und Poly(ethylen-co-acrylsäure) ausgewählt ist.

26. Polymerzusammensetzung nach Anspruch 24 oder Anspruch 25, wobei der Farbstoffgehalt etwa 0,1 bis etwa 0,5 Teile infrarot-aktives Nanopigment pro 100 Teile Polymer beträgt.

## Revendications

1. Composition colorante comprenant un colorant organique nano-encapsulé dans un matériau argileux,
la substance colorante étant choisie pour fournir l'absorption du rayonnement IR dans une matrice polymère.

2. Composition colorante selon la revendication 1, ledit colorant organique étant choisi parmi un ou plusieurs colorant(s) actif(s) vis-à-vis de l'IR.

3. Composition colorante selon la revendication 1, ledit colorant organique étant choisi parmi les substances colorantes qui subissent un décalage de l'absorption maximale Aₘₐₓ comme conséquence de la nano-encapsulation et/ou de la dispersion de la composition colorante dans une matrice polymère afin de former des compositions polymères qui absorbent le rayonnement IR.

4. Composition colorante selon la revendication 1, ledit colorant organique étant choisi pour fournir des compositions polymères qui absorbent dans d'autres parties du spectre EM telles que les bandes UV ou visibles.

5. Composition colorante selon l'une quelconque des revendications précédentes, ladite argile étant choisie parmi les argiles smectites et d'autres matériaux argileux stratifiés d'origine naturelle ou synthétique.

6. Composition colorante selon la revendication 5, ladite argile étant choisie parmi la bentonite ou la montmorillonite.

7. Composition colorante selon la revendication 5 ou la revendication 6, ledit matériau argileux ayant une capacité d'échange de cations (CEC) de 60 à 180 mmol d'équivalent sodium/100 g d'argile.

8. Composition colorante selon la revendication 7, le rapport du colorant à l'argile étant de 0,05 à 0,3 parties de colorant par partie d'argile.

9. Composition colorante selon la revendication 7, la composition étant broyée jusqu'à une taille moyenne de particule inférieure à 15 µm.

10. Procédé de production d'une substance colorante nano-encapsulée incluant les étapes de :
a) dispersion d'un matériau argileux ayant une capacité d'échange de cations (CEC) de 60 à 180 mmol d'équivalent sodium/100 g d'argile dans un milieu aqueux ;
b) dissolution d'un colorant organique dans un solvant ou un mélange qui est miscible avec ledit milieu aqueux ;
c) mélange de ladite argile dispersée et dudit colorant dissous pour former un précipité ; la séparation dudit précipité ;
d) séchage dudit précipité ; et
e) broyage dudit précipité sec jusqu'à une taille moyenne de particule inférieure à 15 µm;
la substance colorante étant choisie pour fournir l'absorption du rayonnement IR dans une matrice polymère.

11. Procédé selon la revendication 10, dans lequel est incorporée entre les étapes c) et d) une étape supplémentaire de lavage dudit précipité jusqu'à ce que l'éluat de lavage soit essentiellement exempt d'ions.

12. Procédé selon l'une quelconque des revendications 10 et 11, ledit colorant étant choisi parmi un ou plusieurs colorant(s) de type immonium, actif(s) vis-à-vis du rayonnement IR.

13. Procédé selon la revendication 12, ledit solvant incluant un alcool inférieur.

14. Procédé selon l'une quelconque des revendications 10 à 13, ledit matériau argileux étant la bentonite sodique avec une CEC de 95 mmol de Na pour 100 g de bentonite à la température ambiante.

15. Procédé selon l'une quelconque des revendications 10 à 14, ladite réaction de nano-encapsulation étant conduite à une température comprise entre 20°C et 80°C pour des durées de réaction allant de 4 heures à 24 heures.

16. Procédé selon l'une quelconque des revendications 10 à 15, dans lequel le rapport du colorant à l'argile est de 0,05 à 0,3 parties de colorant par partie d'argile.

17. Composition colorante préparée selon le procédé selon l'une quelconque des revendications 10 à 16.

18. Composition colorante incluant un colorant organique nano-encapsulé dans un matériau argileux ayant une capacité d'échange de cations (CEC) de 60 à 180 mmol d'équivalent sodium/100 g d'argile,
la substance colorante étant choisie pour fournir l'absorption du rayonnement IR dans une matrice polymère.

19. Composition colorante selon l'une quelconque des revendications 1 à 9 et 17 et 18,
a) lorsque qu'utilisée dans des compositions polymères thermoplastiques par l'incorporation dans le polymère sous forme de particules avant la formation d'une masse fondue ou directement dans la masse fondue polymère, ou
b) lorsqu'incorporée dans des compositions polymères liquides durcissables par dispersion dans le prépolymère liquide avant le durcissement.

20. Composition polymère optiquement active incluant une matrice polymère optiquement transmissive ayant dispersée à l'intérieur une composition colorante incluant un colorant organique nano-encapsulé dans un matériau argileux.

21. Composition polymère selon la revendication 20, ladite composition colorante est selon l'une quelconque des revendications 1 à 9 et 17 et 18.

22. Composition polymère selon la revendication 20, ladite composition colorante étant produite selon le procédé selon les revendications 10 à 16.

23. Composition polymère durcissable liquide selon l'une quelconque des revendications 20 à 22, lorsqu'utilisée comme composition d'encapsulation ou d'enrobage pour des composants électroniques optiquement actifs.

24. Composition polymère selon l'une quelconque des revendications 20 à 22, lorsqu'utilisée comme couche polymère dans des structures vitreuses stratifiées.

25. Composition polymère selon la revendication 24, ledit polymère étant choisi parmi le polyvinyl butyral (PVB) et le poly(éthylène-co-acide acrylique).

26. Composition polymère selon la revendication 24 ou la revendication 25, la teneur en substance colorante étant d'environ 0,1 à environ 0,5 parties de nano-pigment actif vis-à-vis du rayonnement infrarouge pour 100 parties de polymère.
